# EUROPÄISCHE PATENTSCHRIFT

(11) **EP 4 072 465 B1**
(45) Veröffentlichungstag und Bekanntmachung des Hinweises auf die Patenterteilung: **07.06.2023**
(21) Anmeldenummer: 21703388.5
(22) Anmeldetag: 28.01.2021
(51) Int. Cl.: A61C 8/00

(54) **ZAHNIMPLANTAT UND ZAHNPROTHESE MIT ZAHNIMPLANTAT**
DENTAL IMPLANT AND DENTAL PROSTHESIS WITH DENTAL IMPLANT
IMPLANT DENTAIRE ET PROTHÈSE DENTAIRE AVEC IMPLANT DENTAIRE

(30) Priorität: 30.01.2020 DE 102020102307
(43) Veröffentlichungstag der Anmeldung: 19.10.2022
(60) Teilanmeldung: 22212102.2
(73) Patentinhaber: TRI Dental Implants Int. AG, 6331 Hünenberg (CH)
(72) Erfinder: VENANZONI, Sandro, 8051 Zürich (CH); PEREZ, Rafael, 79106 Freiburg (DE); KAST, Holger, 6331 Hünenberg (CH); JUNG, Ronald, 8704 Herrliberg (CH)
(74) Vertreter: Witte, Weller & Partner Patentanwälte mbB
(86) Internationale Anmeldenummer: PCT/EP2021/052030
(87) Internationale Veröffentlichungsnummer: WO 2021/152041

(56) Entgegenhaltungen:
- EP-A1- 2 151 213
- CH-B1- 697 838
- DE-A1-102018 113 237
- ES-A1- 2 323 337
- FR-A1- 2 806 291
- US-A- 5 449 291

## Beschreibung

Die vorliegende Erfindung betrifft ein Zahnimplantat zur Verwendung in einer Zahnprothese. Des Weiteren betrifft die vorliegende Erfindung eine Zahnprothese, welche das erfindungsgemäße Zahnimplantat aufweist.

Der Begriff "Zahnimplantat" wird umgangssprachlich häufig uneinheitlich und oft fälschlicherweise für das Gesamtgebilde einer Zahnprothese verwendet. Daher sei an dieser Stelle klargestellt, dass unter einem "Zahnimplantat" im medizinischen und vorliegenden Sinne nur der Implantatkörper verstanden wird, also die künstliche Zahnwurzel, die im Kiefer des Patienten implantiert wird. Häufig wird anstelle des Begriffs "Zahnimplantat" daher auch der Begriff "Implantatkörper" verwendet. Im Weiteren wird jedoch einheitlich der Begriff "Zahnimplantat" für den genannten Teil der Zahnprothese verwendet.

Unter dem Begriff "Suprakonstruktion" wird ein auf einem Zahnimplantat befestigter Zahnersatz verstanden. Hierbei kann es sich beispielsweise um eine künstliche Zahnkrone (auch "Implantatkrone" genannt), eine Brücke oder ein sonstiges prothetisches bzw. künstliches Zahngebilde handeln.

Herkömmliche Zahnprothesen weisen zusätzlich zu dem Zahnimplantat und der Suprakonstruktion ein sogenanntes Abutment auf, welches als Verbindungsteil zwischen dem Zahnimplantat und der Suprakonstruktion fungiert. Das Abutment bildet den sensiblen Übergang durch das periimplantäre Weichgewebe zur Mundhöhle und zur Suprakonstruktion. Derartige Abutments werden teilweise auch als "Stützpfeiler" oder als "Implantatpfosten" bezeichnet. Üblicherweise sind Abutments aus Titan, Keramik oder Keramikverbundstoffen wie Aluminiumoxid- oder Zirkondioxidkeramik.

Die Suprakonstruktion, also beispielsweise die künstliche Zahnkrone, ist typischerweise aus Keramik oder einem vergleichbaren Werkstoff. Traditionell wird die Suprakonstruktion von einem Zahntechniker wie folgt hergestellt: Zunächst wird ein Wachsmodell für die künstliche Zahnkrone erzeugt. Dann wird anhand des Wachsmodells die künstliche Zahnkrone gegossen. Das Abutment wird manuell auf die richtige Größe und Form abgeschliffen, um im letzten Schritt die gegossene, künstliche Zahnkrone auf das Abutment zu montieren. Meist erfolgt die Montage durch Verkleben der Suprakonstruktion mit dem Abutment. Durch diesen größtenteils manuell durchgeführten Prozess lassen sich hochpräzise Ergebnisse erzielen. Es versteht sich jedoch, dass das zeitaufwändig und damit auch kostenintensiv ist. Zudem ergibt sich eine Klebefuge zwischen der Suprakonstruktion und dem Abutment, welche anfällig für Undichtigkeiten ist und zudem die Langlebigkeit der Zahnprothese einschränken kann.

Heutzutage gibt es vielerlei Bestrebungen, den o.g. Prozess weitest möglich zu digitalisieren bzw. zu automatisieren. Die Suprakonstruktion wird mittlerweile häufig anhand eines 3D-Modells auf einer Fräsmaschine gefräst. Bei dieser Art der Herstellung wird direkt die Anschlussgeometrie für den Anschluss bzw. die Verbindung mit dem Abutment in die Suprakonstruktion auf deren Hinterseite eingebracht. Die Form und Größe des Abutments muss daher bereits bei der Herstellung der künstlichen Zahnkrone bekannt sein, um die Fräsmaschine entsprechend programmieren zu können. Dies wird meist anhand eines CAD-Modells des Abutments gemacht, welches in die Steuerung der Fräsmaschine eingelesen wird.

Da die Form und Größe des Abutments bereits vor der Herstellung der Suprakonstruktion bekannt sein muss, wählen viele Hersteller ein kurzes und kleines Abutment, das für jede Anatomie passt. Bei länglichen, also vergleichsweise langen Suprakonstruktionen ist ein kurzes und kleines Abutment im Verhältnis zu der Suprakonstruktion allerdings biomechanisch unpassend, so dass es zu Lockerungen oder Brüchen kommen kann.

Andere Hersteller lösen dies durch viele unterschiedliche Abutments. Je nach Form und Größe der Suprakonstruktion werden dann unterschiedlich große bzw. unterschiedlich geformte Abutments verwendet. So muss für einen künstlichen Schneidezahn beispielsweise ein anderes Abutment verwendet werden als für einen künstlichen Backenzahn. Ist bei der Verwendung für einen künstlichen Schneidezahn beispielsweise die hintere Flanke des Abutments nicht abgeschrägt, so wäre das Abutment auf der Hinterseite der Suprakonstruktion sichtbar, was schon aus rein ästhetischen Gesichtspunkten unerwünscht ist. Dieses Problem ergibt sich bei der Verwendung für einen künstlichen Backenzahn dagegen möglicherweise nicht.

Bei der automatisierten Herstellung mit digitalen CAD-Modellen werden für den Hersteller der Suprakonstruktion üblicherweise mehrere CAD-Datensätze bereitgestellt, welche die unterschiedlichen Formen der Abutments abbilden. Gleichzeitig muss der Hersteller der Suprakonstruktion eine Vielzahl von Abutments unterschiedlicher Formen und Größen auf Lager halten. Dies gestaltet sich vielfach als umständlich und erzeugt darüber hinaus hohe Lagerkosten.

Die Nachteile der bisherigen Herangehensweisen lassen sich also wie folgt zusammenfassen: Zum einen schränkt die Verwendung von Abutments die Form- und Gestaltungsfreiheit der Suprakonstruktion inklusive deren transgingivalen Anteils ein. Ein nicht flexibler transgingivaler Anteil der Suprakonstruktion kann vor allem Probleme beim Weichgewebsmanagement hervorrufen. Ein ideales Weichgewebsmanagement ist allerdings entscheidend für ein ästhetisches Ergebnis und ein langfristig stabiles Knochenniveau. Zum anderen sind die Material- und Herstellungskosten für eine solche Zahnprothese gemäß dem Stand der Technik relativ hoch. Darüber hinaus ergibt sich eine in vielerlei Hinsicht nachteilhafte Klebefuge zwischen der Suprakonstruktion und dem Abutment.

In der DE 10 2018 113 237 A1 wird ein völlig neuer Ansatz beschrieben, bei dem eine Zahnprothese der o.g. Art auch ohne Abutment auskommt, wobei also die Suprakonstruktion direkt mit dem Zahnimplantat verbunden wird. Dies wird insbesondere durch speziell ausgestaltete Schnittstellen an dem Zahnimplantat und der Suprakonstruktion gelöst, die eine direkte Befestigung der beiden Bauteile miteinander ermöglicht. Die Schnittstelle an dem Zahnimplantat und die dazu komplementäre Schnittstelle an der Suprakonstruktion ermöglichen eine geometrisch eindeutig definierte Anordnung der Suprakonstruktion direkt an dem Zahnimplantat (ohne ein dazwischen angeordnetes Abutment). Dies garantiert eine eindeutig definierte Relativposition zwischen Suprakonstruktion und Zahnimplantat.

Um eine unerwünschte Verdrehung bzw. Rotation der Suprakonstruktion gegenüber dem Zahnimplantat zu vermeiden, ist eine Verdrehsicherung notwendig. Diese Verdrehsicherung wird bei dem in der DE 10 2018 113 237 A1 beschriebenen Zahnimplantat durch eine nicht-drehsymmetrische Ausbildung der genannten Schnittstelle am Zahnimplantat und eine entsprechend als Gegenstück geformte Schnittstelle an der Suprakonstruktion erreicht.

Wenngleich sich das in der DE 10 2018 113 237 A1 beschriebene Zahnimplantat als überaus vorteilhaft herausgestellt hat, haben sich die Erfinder der vorliegenden Erfindung zum Ziel gesetzt, die Verdrehsicherung des Zahnimplantats noch weiter zu verbessern.

Die ES 2 323 337 A1 offenbart ein Zahnimplantat, welches die Grundlage für den Oberbegriff des Anspruchs 1 bildet. Weitere beispielhafte Zahnimplantate sind aus den folgenden Druckschriften bekannt: CH 697 838 B1 und FR 2 806 291 A1.

Es ist daher eine Aufgabe der vorliegenden Erfindung, ein Zahnimplantat bereitzustellen, das ohne die Verwendung eines Abutments direkt mit einer Suprakonstruktion verbunden werden kann, wobei die Verdrehsicherung zur Verhinderung einer Verdrehung bzw. Rotation der Suprakonstruktion gegenüber dem Zahnimplantat weiter verbessert ist.

Diese Aufgabe wird gemäß Anspruch 1 durch ein Zahnimplantat gelöst, das auf einer Außenseite ein Außengewinde zur Befestigung des Zahnimplantats an einem Kieferknochen aufweist und eine sich entlang einer zentralen Längsachse des Zahnimplantats erstreckende Öffnung hat, in der ein Innengewinde zur Befestigung einer Suprakonstruktion an dem Zahnimplantat angeordnet ist, wobei das Zahnimplantat ferner eine Schnittstelle zur Befestigung der Suprakonstruktion an dem Zahnimplantat aufweist, die im Bereich eines stirnseitigen Endes des Zahnimplantats angeordnet ist und eine Innenfläche aufweist, die in der Öffnung angeordnet ist und die Längsachse zumindest teilweise umgibt. Das erfindungsgemäße Zahnimplantat weist ferner ein Verdrehsicherungselement auf, das in der Öffnung angeordnet ist und dazu eingerichtet ist, eine Verdrehung der Suprakonstruktion um die Längsachse relativ zu dem Zahnimplantat zu verhindern. Das Verdrehsicherungselement hat einen geringeren Abstand von der Längsachse als die Innenfläche. Eine von der Längsachse abgewandte, radial außenliegende Seite des Verdrehsicherungselements weist auf die Innenfläche zu und ist von dieser beabstandet, so dass zwischen der radial außenliegenden Seite des Verdrehsicherungselements und der Innenfläche ein nach oben hin offener Hohlraum existiert. Das Verdrehsicherungselement hat in einem Querschnitt, der orthogonal zu der Längsachse ausgerichtet ist, eine konvex-konkave Form, wobei eine radial innenliegende Seite des Verdrehsicherungselements, welche der Öffnung zugewandt ist, konkav geformt ist, und eine radial außenliegende Seite des Verdrehsicherungselements, welche der radial innenliegenden Seite gegenüberliegt, konvex geformt ist. Das Verdrehsicherungselement weist ferner zwei parallel zueinander verlaufende, planare Mitnehmerflächen auf, die auf gegenüberliegenden Seiten des Verdrehsicherungselements angeordnet sind. Die Mitnehmerflächen verlaufen zwischen der radial außenliegenden Seite und der radial innenliegenden Seite des Verdrehsicherungselements und sind quer zu der radial außenliegenden Seite und der radial innenliegenden Seite des Verdrehsicherungselements ausgerichtet.

Die vorliegende Erfindung ist insbesondere dadurch gekennzeichnet, dass das am Zahnimplantat vorgesehene Verdrehsicherungselement eine Art Hinterschnitt erzeugt, in das der an der Unterseite der Suprakonstruktion vorgesehene Fortsatz zumindest teilweise eingreift. Als Hinterschnitt wird dabei der nach oben hin offene Hohlraum bezeichnet, der zwischen der radial außenliegenden Seite des Verdrehsicherungselements und der Innenfläche des Zahnimplantats gebildet ist. In diesem Hohlraum greift die Suprakonstruktion mit einem radial außenliegenden Ende des Fortsatzes ein.

Hierzu verjüngt sich die Aussparung, die in den an der Unterseite der Suprakonstruktion angeordneten Fortsatz eingebracht ist, radial nach außen etwas. Die Aussparung ist mit anderen Worten an ihrem radial außenliegenden Ende schmaler als an ihrem radial innenliegenden Ende, das näher an der zentralen Längsachse angeordnet ist. Diese Verjüngung der Aussparung ist insbesondere in dem genannten Querschnitt ersichtlich, der orthogonal zu der zentralen Längsachse der Suprakonstruktion ausgerichtet ist.

Der erwähnte Hohlraum, der durch das Verdrehsicherungselement am Zahnimplantat erzeugt wird und die erwähnte Verjüngung der in den Fortsatz der Suprakonstruktion eingebrachten Aussparung führen insbesondere zu folgenden Vorteilen: Zum einen kann dadurch eine mechanisch sehr stabile Verdrehsicherung realisiert werden. Nicht nur das am Zahnimplantat angeordnete Verdrehsicherungselement, sondern auch der an der Unterseite der Suprakonstruktion ausgebildete Fortsatz kann mechanisch stabil ausgebildet werden.

Die Stabilitätserhöhung am Fortsatz der Suprakonstruktion ist im Wesentlichen darauf zurückzuführen, dass die darin vorgesehene Aussparung insbesondere aufgrund deren Verjüngung nach außen vergleichsweise klein ausgestaltet sein kann. Durch die Verjüngung der Aussparung kann diese bspw. kleiner ausgestaltet sein als die Aussparung, die mit rein geraden Seitenflanken an der in der früheren Patentanmeldung mit der Anmeldenummer 10 2019 111 699.6 gezeigten Suprakonstruktion. Ferner ermöglicht der am Zahnimplantat vorgesehene Hohlraum und die dazugehörige Form der Aussparung am Fortsatz der Suprakonstruktion einen kompakteren Aufbau der Suprakonstruktion sowie des Zahnimplantats.

Gemäß einer Ausgestaltung des Zahnimplantats verjüngt sich der nach oben hin offene Hohlraum, in einem Längsschnitt des Zahnimplantats betrachtet, nach unten hin, so dass ein in dem Längsschnitt im Bereich eines nach oben hin offenen Endes des Hohlraums gemessener, erster Abstand zwischen der radial außenliegende Seite des Verdrehsicherungselements und der Innenfläche größer als ein in dem Längsschnitt im Bereich eines unteren Endes des Hohlraums gemessener, zweiter Abstand zwischen der radial außenliegende Seite des Verdrehsicherungselements und der Innenfläche ist.

Der Hohlraum hat in diesem Längsschnitt vorzugsweise im Wesentlichen eine V-Form. Der erwähnte Längsschnitt des Zahnimplantats wird durch die Längsachse des Zahnimplantats und eine orthogonal dazu ausgerichtete Radialrichtung aufgespannt.

Die erwähnte Verjüngung des Hohlraums nach unten hin hat insbesondere den Vorteil, dass die Innenfläche des Zahnimplantats eine tragende Wirkung für die Suprakonstruktion erhält. Zudem lässt sich die Suprakonstruktion relativ einfach an dem Zahnimplantat montieren und der entsprechende Teil der Suprakonstruktion von ob in den Hohlraum einführen.

Erfindungsgemäß weist das am Zahnimplantat vorgesehene Verdrehsicherungselement zwei parallel zueinander verlaufende, planare Mitnehmerflächen auf.

Diese planaren Mitnehmerflächen liegen in montiertem Zustand der Zahnprothese vorzugsweise an äquivalent dazu geformten, planaren Mitnehmerflächen an, die an den beiden gegenüberliegenden Seitenflanken der an der Suprakonstruktion vorgesehenen Aussparung angeordnet sind. Die Mitnehmerflächen dienen der Kraftaufnahme in Umfangsrichtung und verhindern ein Verdrehen bzw. eine Torsion der Suprakonstruktion um die Längsachse relativ zu dem Zahnimplantat.

Vorzugsweise verlaufen sowohl die am Zahnimplantat vorgesehenen Mitnehmerflächen als auch die an der Suprakonstruktion vorgesehenen, dazu korrespondierenden Mitnehmerflächen jeweils parallel zueinander und parallel zu der jeweiligen Längsachse des Zahnimplantats bzw. der Suprakonstruktion.

An dieser Stelle sei angemerkt, dass die Längsachse des Zahnimplantats in montiertem Zustand der Zahnprothese vorzugsweise mit der Längsachse der Suprakonstruktion zusammenfällt.

Weiterhin ist es bevorzugt, dass sowohl die an dem Zahnimplantat vorgesehenen Mitnehmerflächen als auch die dazu korrespondierenden, an der Suprakonstruktion vorgesehenen Mitnehmerflächen jeweils parallel zu einer Radialrichtung verlaufen, die orthogonal zu der jeweiligen Längsachse ausgerichtet ist.

Eine derartige Ausrichtung ermöglicht eine große Kraftübertragung der in Umfangsrichtung zwischen Suprakonstruktion und Zahnimplantat wirkenden Kräfte. Aufgrund der genannten Ausrichtung lassen sich die Mitnehmerflächen auch sehr einfach durch eine Fräsbearbeitung herstellen.

Vorzugsweise tritt in montiertem Zustand der Zahnprothese zwischen dem am Zahnimplantat vorgesehenen Verdrehsicherungselement und der an der Suprakonstruktion vorgesehenen Aussparung lediglich ein Kontakt entlang der genannten planaren Mitnehmerflächen auf. Dies sorgt für eine mechanisch definierte Anlage zwischen Suprakonstruktion und Zahnimplantat, die mechanisch nicht überbestimmt ist.

Erfindungsgemäß hat das Verdrehsicherungselement in einem Querschnitt, der orthogonal zu der Längsachse ausgerichtet ist, eine konvex-konkave Form.

Bei dem Verdrehsicherungselement handelt es sich vorzugsweise um eine Art Lamelle oder Steg, die im Vergleich zu der beschriebenen Innenfläche, die im Bereich der Schnittstelle des Zahnimplantats die Innenumfangsfläche der zentral darin eingebrachten Öffnung bildet, radial weiter nach innen versetzt ist. Dieses Verdrehsicherungselement verläuft vorzugsweise parallel zu der Längsachse des Zahnimplantats. Durch seinen konvex-konkaven Querschnitt ist das Verdrehsicherungselement optimal an die Form der Öffnung (Bohrung) im Zahnimplantat angepasst und nimmt daher relativ wenig Raum ein.

Vorzugsweise hat das Verdrehsicherungselement eine konstante Wandstärke. Hierbei ist die im Querschnitt (orthogonal zu der Längsachse des Zahnimplantats) gemessene Wandstärke gemeint.

Die konstante Wandstärke hat den Vorteil, dass das als Lamelle oder Steg ausgestaltete Verdrehsicherungselement trotz seiner platzsparenden Ausbildung eine hohe Steifigkeit hat. Zudem kann die Schraube, die zur Verbindung der Suprakonstruktion mit dem Implantat eingesetzt wird, dadurch stabil an dem Implantat anliegen. Genauer gesagt, bietet das Verdrehsicherungselement eine Anlagefläche für die Schraube.

Eine radial innenliegende Seite des Verdrehsicherungselements, welche der radial außenliegenden Seite des Verdrehsicherungselements gegenüberliegt, verläuft vorzugsweise parallel zu der radial außenliegenden Seite des Verdrehsicherungselements und damit ebenfalls parallel zu der Längsachse. Somit ergibt sich vorzugsweise ein konvexkonkaver Querschnitt des Verdrehsicherungselements mit einander gegenüberliegenden, parallel zueinander verlaufenden Seiten, die quer zu den am Verdrehsicherungselement vorgesehenen, planaren Mitnehmerflächen verlaufen.

Unter dem Begriff "quer" wird vorliegend jede Art der Ausrichtung verstanden, die nicht parallel ist. Unter "quer" wird somit vorzugsweise, jedoch nicht notwendigerweise orthogonal verstanden. Auch Ausrichtungen abweichend von senkrechten Ausrichtungen werden vorliegend als quer bezeichnet, sofern diese nicht parallel zueinander sind.

Gemäß einer weiteren Ausgestaltung ist die am Zahnimplantat vorgesehene Schnittstelle spiegelsymmetrisch zu einer Längsschnittebene, in der die Längsachse liegt und die das Verdrehsicherungselement in zwei gleich große Hälften teilt. Äquivalent dazu ist es bevorzugt, dass der an der Unterseite der Suprakonstruktion vorgesehener Fortsatz spiegelsymmetrisch zu einer Längsschnittebene ist, in der die Längsachse und die die Aussparung in zwei gleich große Hälften teilt. Das an dem Zahnimplantat angeordnete Verdrehsicherungselement und die komplementär dazu geformte Aussparung, die in dem Fortsatz der Suprakonstruktion vorgesehen ist, sind vorzugsweise ebenfalls spiegelsymmetrisch zu der genannten Längsschnittebene.

Gemäß einer weiteren Ausgestaltung weist die Innenfläche eine gewölbte Fläche auf, die in einem Längsschnitt, in dem die Längsachse liegt, konvex gewölbt ist. Diese gewölbte Fläche erstreckt sich vorzugsweise über einen Winkelbereich von mindestens 90° um die Längsachse des Zahnimplantats herum. Besonders bevorzugt verläuft die gewölbte Fläche rund herum (360°) um die Längsachse des Zahnimplantats.

Unter einer "konvexen" Wölbung wird vorliegend jede nach außen gewölbte Wölbung verstanden. eine konvexe Wölbung bildet das Gegenteil zu einer konkaven, nach innen gewölbten Mulde. Lediglich zur Klarstellung wird die konvexe Wölbung vorliegend zusätzlich auch als abgerundet definiert, wenngleich der Begriff "konvex" eine solche Rundung bereits impliziert. Die vorliegend als konvex und abgerundet definierte Wölbung weist vorzugsweise eine stetige Tangentensteigung (ohne "Knick") auf.

Diese konvex gewölbte Fläche, die einen Teil der Innenfläche des Zahnimplantats bildet, dient der Befestigung der Suprakonstruktion an dem Zahnimplantat. In montiertem Zustand der Zahnprothese liegt sie vorzugsweise an einer komplementär dazu geformten, konkav gewölbten Mantelfläche der Suprakonstruktion an.

Die beiden zueinander komplementär geformten, gewölbten Flächen nehmen Kräfte in Radialrichtung, also orthogonal zu der Längsachse des Zahnimplantats, auf. Zudem dienen sie als Zentrierung der Suprakonstruktion gegenüber dem Zahnimplantat.

Gemäß einer weiteren Ausgestaltung weist die Schnittstelle des Zahnimplantats eine im Vergleich zu der Innenfläche radial weiter außen angeordnete Auflagefläche auf, die sich um die Längsachse herum erstreckt und rund herum um die Längsachse in einem konstanten Winkel quer zu der Längsachse ausgerichtet ist.

Bei dieser Auflagefläche handelt es sich vorzugsweise um eine kreisringförmige Auflagefläche, die die konvex gewölbte Fläche umgibt. Vorzugsweise hat die kreisringförmige Auflagefläche rund herum einen konstanten Winkel > 60° in Bezug auf die Längsachse des Zahnimplantats. Besonders bevorzugt ist dieser Winkel ein rechter Winkel (90°).

Die genannte Auflagefläche liegt in montiertem Zustand der Zahnprothese an einer komplementär dazu geformten Auflagefläche, die an der Unterseite der Suprakonstruktion angeordnet ist, an. Dies dient der Aufnahme von Axialkräften parallel zur Längsrichtung. Hierdurch werden Zugspannungen vermieden, welche zum Bruch der Suprakonstruktion führen könnten. Des Weiteren dienen die beiden Auflageflächen, die komplementär zueinander an dem Zahnimplantat und der Suprakonstruktion ausgestaltet sind, als Grenz- bzw. Dichtflächen, um entlang des Umfangs Zwischenräume zwischen der Suprakonstruktion und dem Zahnimplantat zu vermeiden, durch die Verunreinigungen eintreten könnten.

Die Auflageflächen bilden daher vorzugsweise den radial äußersten Bereich der jeweiligen Schnittstelle am Zahnimplantat bzw. an der Suprakonstruktion, welche alle übrigen Bereiche der jeweiligen Schnittstelle umgibt. Die genannte Auflagefläche ist somit vorzugsweise auch im Vergleich zu dem Verdrehsicherungselement radial weiter außen angeordnet und hat somit einen größeren radialen Abstand von der Längsachse als das Verdrehsicherungselement.

Die am Zahnimplantat angeordnete Auflagefläche bildet vorzugsweise eine an der Oberseite des Zahnimplantats angeordnete Stirnfläche, über die das Verdrehsicherungselement nicht absteht. Das Verdrehsicherungselement ist also unterhalb der Auflagefläche angeordnet.

Gemäß einer weiteren Ausgestaltung grenzt die konvex gewölbte Fläche, die einen Teil der Innenfläche des Zahnimplantats bildet, an die Auflagefläche unmittelbar an. Vorzugsweise geht ein radial äußerer Rand der Innenfläche tangential in die Auflagefläche über.

Ferner ist es bevorzugt, dass das im Zahnimplantat vorgesehene Innengewinde einen größeren Abstand von dem stirnseitigen Ende des Zahnimplantats hat als das Verdrehsicherungselement. Das Verdrehsicherungselement ist also mit anderen Worten vorzugsweise oberhalb des Innengewindes und damit näher an dem stirnseitigen Ende des Zahnimplantats angeordnet.

Wie eingangs bereits erwähnt, betrifft die vorliegende Erfindung nicht nur das Zahnimplantat, sondern auch eine Zahnprothese, die ein solches Zahnimplantat aufweist. Vorzugsweise wird die Suprakonstruktion mit Hilfe eines Befestigungselements direkt an dem Zahnimplantat befestigt. Als Befestigungselement dient besonders bevorzugt eine Schraube.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele sind in den Zeichnungen dargestellt und werden in der nachfolgenden Beschreibung näher erläutert. Es zeigen:
- Fig. 1: eine perspektivische Ansicht eines ersten Ausführungsbeispiels des erfindungsgemäßen Zahnimplantats;
- Fig. 2: eine Längsschnittansicht des in Fig. 1 gezeigten, ersten Ausführungsbeispiels des erfindungsgemäßen Zahnimplantats;
- Fig. 3: eine Detail aus Fig. 2;
- Fig. 4: eine Draufsicht von oben auf das in Fig. 1 gezeigte Ausführungsbeispiel des erfindungsgemäßen Zahnimplantats;Fig. 5 eine perspektivische Ansicht einer beispielhaften Suprakonstruktion;
- Fig. 6: eine Draufsicht von unten auf die in Fig. 5 gezeigte Suprakonstruktion;
- Fig. 7: eine Detailansicht eines in Fig. 5 gestrichelt angedeuteten Details der Suprakonstruktion;
- Fig. 8: ein Querschnitt eines Details der in Fig. 5 gezeigten Suprakonstruktion; und
- Fig. 9: eine Längsschnittansicht einer Zahnprothese mit dem erfindungsgemäßen Zahnimplantat und der in Fig. 5 gezeigten Suprakonstruktion gemäß des ersten Ausführungsbeispiels.

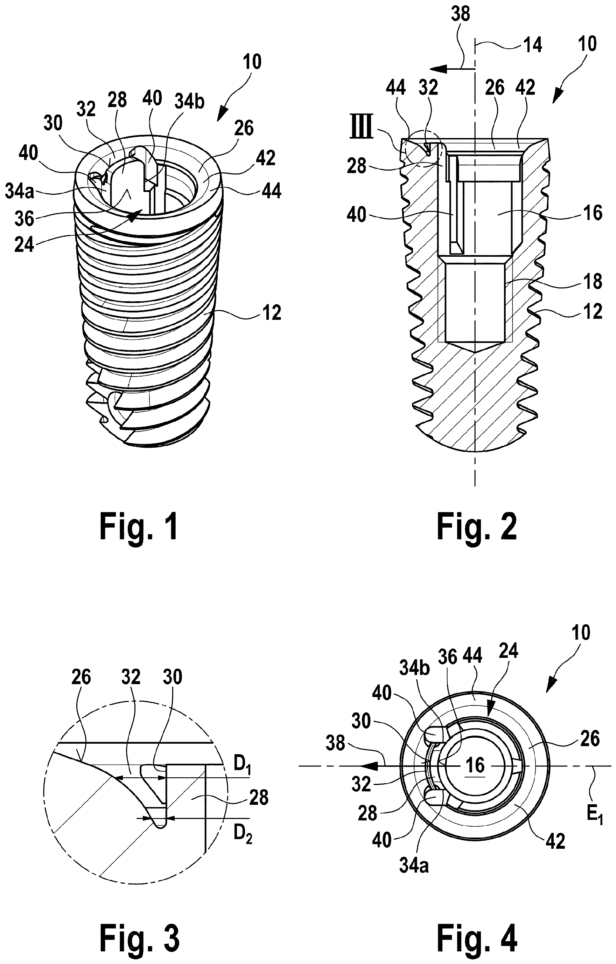

Fig. 1-4 zeigen ein erstes Ausführungsbeispiel des erfindungsgemäßen Zahnimplantats in verschiedenen Ansichten. Das Zahnimplantat ist darin in seiner Gesamtheit mit der Bezugsziffer 10 gekennzeichnet.

Das Zahnimplantat 10 ist typischerweise aus Titan oder Zirkonoxid gefertigt. Es weist auf seiner Außenseite ein Außengewinde 12 auf, mit Hilfe dessen das Zahnimplantat 10 in einem Kieferknochen eines Patienten eingeschraubt werden kann. Das Zahnimplantat 10 erstreckt sich im Wesentlichen entlang einer Längsachse 14, welche auch als Mittelachse bezeichnet werden kann. In seinem Inneren weist das Zahnimplantat 10 eine Öffnung 16 auf, welche sich entlang der Längsachse 14 erstreckt. Vorzugsweise ist zumindest ein Teil dieser Öffnung 16 als Bohrung, besonders bevorzugt als Sacklochbohrung ausgestaltet.

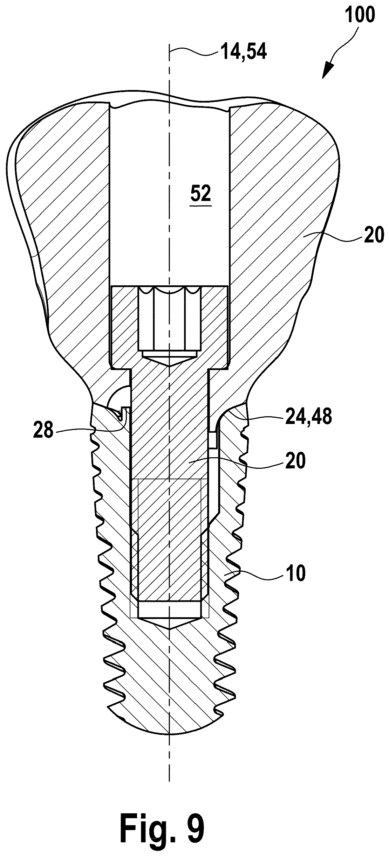

In der Öffnung 16 ist ein Innengewinde 18 angeordnet. Dieses Innengewinde 18 dient der Befestigung einer Suprakonstruktion 20 (künstliche Zahnkrone) an dem Zahnimplantat 10. Zur Befestigung der Suprakonstruktion 20 an dem Zahnimplantat 10 wird vorzugsweise eine Schraube 22 verwendet, welche in das Innengewinde 18 eingreift (siehe Fig. 9). Anstelle einer Schraube 22 ließe sich zur Verbindung der Suprakonstruktion 20 mit dem Zahnimplantat 10 grundsätzlich aber auch eine andere Art von Befestigungsmittel, bspw. ein Bolzen, verwenden.

An dem stirnseitigen, oberen Ende weist das Zahnimplantat 10 eine Schnittstelle 24 auf, die in Fig. 4 in einer Draufsicht von oben dargestellt ist. Diese Schnittstelle 24 dient der Befestigung der Suprakonstruktion 20 an dem Zahnimplantat 10. Die Schnittstelle 24 bildet sozusagen den Kontaktbereich, mit dem das Zahnimplantat 10 die Suprakonstruktion 20 in montiertem Zustand der Zahnprothese 100 kontaktiert.

Eine Besonderheit der Schnittstelle 24 ist darin zu sehen, dass diese aufgrund ihrer Form und Konstruktion eine direkte Anbringung der Suprakonstruktion 20 an dem Zahnimplantat 10 ermöglicht (ohne die Verwendung eines dazwischen angeordneten Abutments).

Die Schnittstelle 24 weist eine Innenfläche 26 auf, die in der Öffnung 16 angeordnet ist. Bei dieser Innenfläche 26 handelt es sich um eine Innenmantelfläche, die die Längsachse 14 zumindest teilweise umgibt. Die Innenmantelfläche 26 ist der Längsachse 14 zugewandt. Vorzugsweise schneidet jeder Normalenvektor, der senkrecht zu dieser Innenmantelfläche 26 ausgerichtet ist, die Längsachse 14, und zwar unabhängig davon in welchem Punkt dieser Normalenvektor an die Innenmantelfläche 26 angesetzt wird. Die Innenmantelfläche 26 ist in dem vorliegend gezeigten Ausführungsbeispiel im Längsschnitt betrachtet zumindest teilweise konvex gekrümmt ausgestaltet, wie dies weiter unten noch näher erläutert wird.

Die Schnittstelle 24 weist des Weiteren ein Verdrehsicherungselement 28 auf. Dieses Verdrehsicherungselement 28 verhindert in montiertem Zustand der Zahnprothese 100 ein Verdrehen der Suprakonstruktion 20 gegenüber dem Zahnimplantat 10. Das Verdrehsicherungselement 28 ist in dem vorliegend gezeigten Ausführungsbeispiel einstückig bzw. integral mit dem Zahnimplantat 10 verbunden. Grundsätzlich kann das Verdrehsicherungselement 28 jedoch auch als separates Bauteil ausgestaltet sein, das in den Zahnimplantat 10 befestigt wird.

Das Verdrehsicherungselement 28 verläuft vorzugsweise parallel zu der Längsachse 14. Im Vergleich zu der zuvor erwähnten, konvex gekrümmten Innenfläche 26 ist das Verdrehsicherungselement 28 radial etwas weiter innen angeordnet, also näher an der Längsachse 14. Wie aus der in Fig. 4 gezeigten Draufsicht von oben erkennbar ist, hat das Verdrehsicherungselement 28 in einem Querschnitt orthogonal zu der Längsachse 14 eine konvex-konkave Form. Eine radial außenliegende Seite 30 des Verdrehsicherungselements 28 ist von der Längsachse 14 abgewandt. Diese radial außenliegende Seite 30 weist auf einen Teil der Innenmantelfläche 26 zu. Die radial außenliegende Seite 30 des Verdrehsicherungselements 28 ist von der Innenmantelfläche 26 jedoch beabstandet, so dass sich zwischen der radial außenliegenden Seite 30 des Verdrehsicherungselements 28 und der Innenmantelfläche 26 ein Hohlraum 32 ergibt, der wie eine Art Hinterschnitt ist. Dieser Hohlraum 32 ist nach oben hin offen.

Wie insbesondere aus Fig. 3 ersichtlich ist, die ein Detail des in Fig. 2 gezeigten Längsschnittes zeigt, verjüngt sich der Hohlraum 32 nach unten hin. Der Hohlraum 32 hat in diesem Längsschnitt betrachtet in etwa die Form eines V. Anders ausgedrückt, ist ein in dem Längsschnitt im Bereich des oberen offenen Endes des Hohlraums 32 gemessener, erster Abstand D1 zwischen der radial außenliegende Seite 30 des Verdrehsicherungselements 28 und der Innenfläche 26 größer als ein in dem Längsschnitt im Bereich eines unteren Endes des Hohlraums 32 gemessener, zweiter Abstand D2 zwischen der radial außenliegende Seite 30 des Verdrehsicherungselements 28 und der Innenfläche 26.

Wie ebenfalls aus Fig. 3 ersichtlich ist, hat das Verdrehsicherungselement 28 vorzugsweise eine konstante Wandstärke. Die Wandstärke des Verdrehsicherungselements 28 ist zumindest im Querschnitt konstant (siehe auch Fig. 4).

Wie weiter unten noch im Detail erläutert wird, greift ein Teil der Suprakonstruktion 20 in diesen Hohlraum 32 ein, wodurch eine spezielle Art der Ausgestaltung der Suprakonstruktion 20 sowie eine spezielle Art der Verbindung der Suprakonstruktion 20 mit dem Zahnimplantat 10 im Bereich des Verdrehsicherungselements 28 ermöglicht wird.

Die radial innen liegende Seite 36 des Verdrehsicherungselements 28, welche der radial außenliegenden Seite 30 gegenüberliegt, ist der Öffnung 16 bzw. der Längsachse 14 zugewandt. Während es sich bei der radial außenliegenden Seite 30 vorzugsweise um eine konvexe Fläche handelt, handelt es sich bei der radial innenliegenden Seite 36 vorzugsweise um eine konkave Fläche. Das Verdrehsicherungselement 28 ist demnach an die Querschnittsform der Öffnung bzw. Bohrung 16 angepasst, und somit vergleichsweise platzsparend ausgestaltet. Das Innengewinde 18 ist von oben frei zugänglich für die Schraube 22.

Das Verdrehsicherungselement 28 weist ferner zwei einander gegenüberliegende Mitnehmerflächen 34a, 34b auf. Diese beiden Mitnehmerflächen 34a, 34b sind auf gegenüberliegenden Seiten des Verdrehsicherungselements 28 angeordnet. Die Mitnehmerflächen 34a, 34b verlaufen quer und zwischen der radial außenliegenden Seite 30 und der radial innenliegenden Seite 36 des Verdrehsicherungselements 28. Sie sind jeweils als planare Flächen ausgestaltet.

Vorzugsweise verlaufen beide Mitnehmerflächen 34a, 34b parallel zu einer Radialrichtung 38, die orthogonal zu der Längsachse 14 ausgerichtet ist. Die genannte Radialrichtung 38 ist in Fig. 2 und 4 jeweils als Pfeil eingezeichnet. Eine durch diese Radialrichtung 38 und die Längsachse 14 aufgespannte, imaginäre Längsschnittebene E₁ teilt das Verdrehsicherungselement 28 in zwei gleich große Hälften. Das Verdrehsicherungselement 28 ist vorzugsweise spiegelsymmetrisch zu dieser Längsschnittebene E₁ ausgestaltet.

Die Mitnehmerflächen 34a, 34b dienen als Anlageflächen für entsprechende Gegenflächen, die an der Suprakonstruktion 20 angeordnet sind. Die Mitnehmerflächen 34a, 34b dienen im Wesentlichen der Aufnahme eines um die Längsachse 14 zwischen der Suprakonstruktion 20 und dem Zahnimplantat 10 wirkenden Drehmoments. Sie verhindern eine Verdrehung der Suprakonstruktion 20 gegenüber dem Zahnimplantat 10 um die Längsachse 14.

Aufgrund der beschriebenen Anordnung der Mitnehmerflächen 34a, 34b nehmen diese im Wesentlichen in Umfangsrichtung wirkende Kräfte auf. Vorzugsweise kontaktiert die Suprakonstruktion 20 das Verdrehsicherungselement 28 in montiertem Zustand der Zahnprothese 100 lediglich entlang dieser beiden Mitnehmerflächen 34a, 34b.

Seitlich neben dem Verdrehsicherungselement 28 sind in diesem Ausführungsbeispiel beidseits Materialeinschnitte 40 vorgesehen. Diese Materialeinschnitte 40 haben keine spezielle Funktion. Sie dienen im Wesentlichen der fertigungstechnischen Vereinfachung der Herstellung des Zahnimplantats 10.

Die Schnittstelle 24 ist vorzugsweise spiegelsymmetrisch zu der zuvor erwähnten, imaginären Ebene E₁ ausgestaltet. Die zu der Schnittstelle 24 gehörende Innenfläche 26 weist, wie bereits erwähnt, eine gewölbte Fläche 42 auf, die in dem in Fig. 2 gezeigten Längsschnitt konvex gewölbt ist. Diese konvex gewölbte Fläche 42 verläuft vorzugsweise rund herum um die Längsachse 14. Sie liegt an einer entsprechend als Gegenstück geformten, konkav gewölbten Fläche an der Suprakonstruktion 20 an. Die konvex gewölbte Fläche 42 dient im Wesentlichen der Aufnahme von Kräften in Radialrichtung 38.

Die konvex gewölbte Fläche 42 wird von einer Auflagefläche 44 umgeben, die im Wesentlichen der Aufnahme von axialen Kräften, also von Kräften parallel zur Längsachse 14, dient. Die Auflagefläche 44 ist radial weiter außen angeordnet als die konvex gewölbte Fläche 42. In dem vorliegend gezeigten Ausführungsbeispiel geht die konvex gewölbte Fläche 42 an ihrem radial außenliegenden Rand vorzugsweise tangential in die Auflagefläche 44 über. Die Auflagefläche 44 erstreckt rund herum um die Längsachse und ist rund herum in einem konstanten Winkel quer zu der Längsachse 14 ausgerichtet. Im vorliegenden Fall handelt es sich bei diesem Winkel um einen Winkel < 90°. Somit handelt es sich bei der Auflagefläche 44 um eine konische Fläche. Grundsätzlich kann die Auflagefläche 44 jedoch auch orthogonal zu der Längsachse 14 ausgerichtet sein. Unabhängig von dem Winkel der Auflagefläche 44 zu der Längsachse 14 ist es, wie bereits erwähnt, bevorzugt, dass diese tangential in die konvex gewölbte Fläche 42 übergeht.

In montiertem Zustand der Zahnprothese 100 stützt sich die Suprakonstruktion 20 sowohl an der konvex gewölbten Fläche 42 als auch an der Auflagefläche 44 ab.

Im Längsschnitt der Zahnimplantats 10 betrachtet (siehe Fig. 2) ist die konvex gewölbte Fläche 42 vorzugsweise als Kreissektor ausgestaltet. Die konvex gewölbte Fläche 42 bildet demnach einen Teil der Oberfläche eines Torus. Wie auch die übrigen Teile der Schnittstelle 24 lässt sich daher sehr einfach mit Hilfe eines Kugelfräsers herstellen. Es versteht sich jedoch, dass die konvex gewölbte Fläche 42 im Längsschnitt nicht zwangsläufig kreisrund sein muss. Sie kann in dem beschriebenen Längsschnitt des Zahnimplantats 10 auch elliptisch geformt oder als Freiformfläche ausgestaltet sein, vorzugsweise ist sie in diesem Querschnitt jedoch "knickfrei".

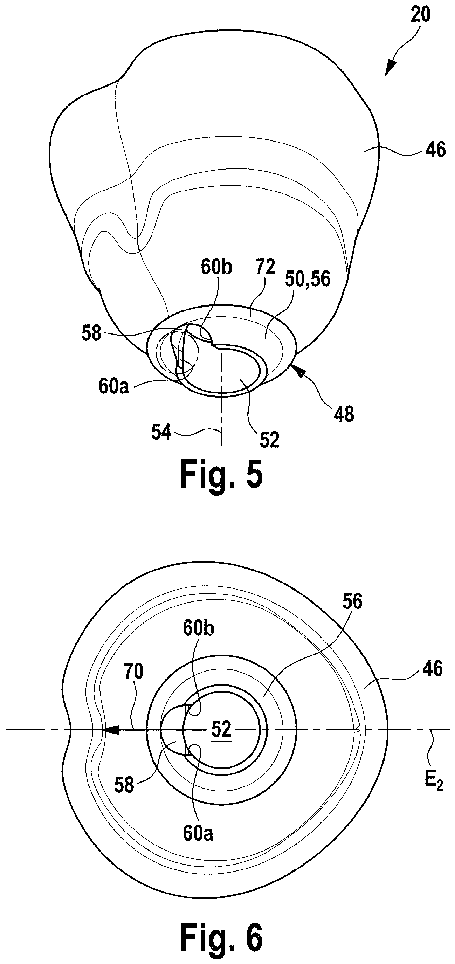

Fig. 5 und 6 zeigen eine beispielhafte Suprakonstruktion 20, die als Gegenstück zu dem in Fig. 1-4 gezeigten Zahnimplantat dient. Die Suprakonstruktion 20 weist einen künstlichen Zahnersatz 46 auf, der hier als künstliche Zahnkrone dargestellt ist. An der Unterseite dieser künstlichen Zahnkrone 46 ist eine Schnittstelle 48 angeordnet, die der Verbindung mit dem Zahnimplantat 10 dient.

Die Schnittstelle 48 weist einen Fortsatz 50 auf, der von der Unterseite der künstlichen Zahnkrone 46 nach unten hin absteht. Dieser Fortsatz 50 ist als entsprechendes Gegenstück zu der am Zahnimplantat 10 angeordneten Schnittstelle 24 ausgestaltet.

Im Inneren weist die Suprakonstruktion 20 eine Öffnung 52 auf, die vorzugsweise als Durchgangsbohrung ausgestaltet ist. Diese Öffnung 52 wird am oberen, stirnseitigen Ende der künstlichen Zahnkrone 46 verschlossen, nachdem die Zahnprothese 100 an dem Patienten montiert ist. Die Öffnung 52 erstreckt sich im Wesentlichen entlang einer Längsachse 54 der Suprakonstruktion 20. Die Längsachse 54 der Suprakonstruktion 20 fällt in montiertem Zustand der Zahnprothese 100 mit der Längsachse 14 des Zahnimplantats 10 zusammen (siehe Fig. 9).

Die Schnittstelle 48 weist eine Mantelfläche 56 auf, die eine Außenseite des Fortsatzes 50 bildet und die Öffnung 52 in Umfangsrichtung umgibt. Die Mantelfläche 56 ist in dem in Fig. 5 und 6 gezeigten Ausführungsbeispiel als Gegenstück zu der an dem Zahnimplantat 10 angeordneten Innenmantelfläche 26 konkav ausgestaltet. Genauer gesagt, ist die Außenmantelfläche 56 des Fortsatzes 50 in einem Längsschnitt, in dem die Längsachse 54 der Suprakonstruktion 20 liegt, konkav gewölbte. Vorzugsweise hat die Außenmantelfläche 56 in diesem Längsschnitt die Form eines Kreissektors. Wie die Innenmantelfläche 26 am Zahnimplantat 10 kann die Außenmantelfläche 56 jedoch im Längsschnitt auch elliptisch geformt sein oder eine Freiform aufweisen.

Grundsätzlich ist es auch möglich, die Außenmantelfläche 56 des Fortsatzes 50 als konische oder zylindrische Fläche auszugestalten. In einem solchen Fall ist dann auch die Innenmantelfläche 26 am Zahnimplantat 10 entsprechend als konische oder zylindrische Fläche ausgestaltet.

Ferner weist die Schnittstelle 48 eine Aussparung 58 auf, die seitlich in den Fortsatz 50 eingebracht ist. Die Aussparung 58 dient als Gegenstück zu dem Verdrehsicherungselement 28. In montiertem Zustand der Zahnprothese 100 greift das Verdrehsicherungselement 28 in diese Aussparung 58 ein.

Die Aussparung 58 ist nach unten hin offen. Sie hat demnach keine geschlossene Kontur, sondern ist einseitig zum stirnseitigen, unteren Ende der Schnittstelle 48 offen. Die Aussparung 58 lässt sich demnach auch als tunnelartige bzw. tunnelförmige Aussparung beschreiben.

Die Aussparung 58 durchquert die Seitenwand des Fortsatzes 50. Sie unterbricht somit die Mantelfläche 56 und mündet in die im Inneren der Suprakonstruktion 20 verlaufende Öffnung 52.

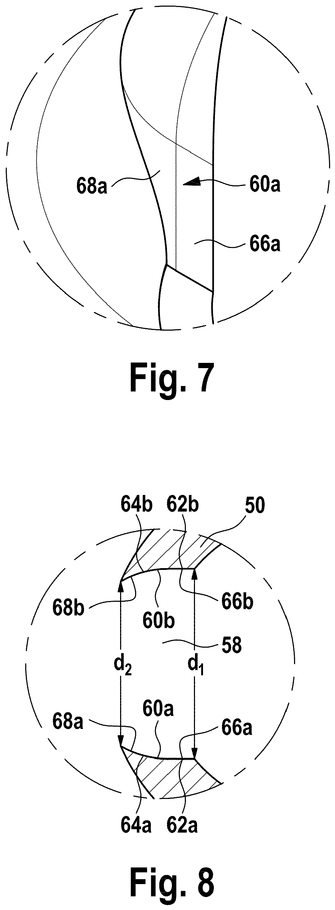

Die Aussparung 58 hat zwei einander gegenüberliegende Seitenflanken 60a, 60b. Eine dieser beiden Seitenflanken 60a ist im Detail in Fig. 7 dargestellt. Fig. 8 zeigt im Detail die Querschnittsform der Aussparung 58. Genauer gesagt handelt es sich bei Fig. 8 um einen Detailausschnitt eines Querschnitts orthogonal zu der Längsachse 54 der Suprakonstruktion 20 durch den Fortsatz 50.

Wie insbesondere aus Fig. 8 erkennbar ist, weist jede der beiden Seitenflanken 60a, 60b einen ersten Bereich 62a bzw. 62b auf, in dem die Seitenflanken 60a, 60b als planare Flächen ausgestaltet sind. In einem radial weiter außen angeordneten zweiten Bereich 64a, 64b sind die beiden Seitenflanken 60a, 60b dagegen jeweils als konkav gekrümmte Flächen ausgestaltet. Dies führt dazu, dass sich die Aussparung 58 in dem genannten Querschnitt radial nach außen hin verjüngt. In dem ersten Bereich 62a, 62b haben die beiden Seitenflanken 60a, 60b also einen größeren Abstand d₁ als in dem zweiten Bereich 64a, 64b. In dem zweiten Bereich 64a, 64b haben die beiden Seitenflanken 60a, 60b der Aussparung 58 einen zweiten Abstand d₂ voneinander, der kleiner als der erste Abstand d₁ ist.

In dem radial innenliegenden, ersten Bereich 62a, 62b weisen die beiden Seitenflanken 60a, 60b vorzugsweise jeweils eine planare Mitnehmerfläche 66a, 66b auf, die als Gegenstücke zu den am Verdrehsicherungselement 28 seitlich angeordneten Mitnehmerflächen 34a, 34b dienen. Vorzugsweise liegt die Suprakonstruktion 20 an dem Verdrehsicherungselement 28 lediglich mit diesen beiden, einander gegenüberliegenden Mitnehmerflächen 66a, 66b an. Die planaren Mitnehmerflächen 66a, 66b verlaufen, ähnlich wie die als Gegenstück fungierenden Mitnehmerflächen 34a, 34b, parallel zueinander und parallel zu der Längsachse 54 der Suprakonstruktion.

Radial weiter außen weist jede Seitenflanke 60a, 60b jeweils eine konkav gekrümmte Fläche 68a, 68b auf. Die konkav gekrümmten Flächen 68a, 68b grenzen vorzugsweise unmittelbar an die Mitnehmerflächen 66a, 66b der jeweiligen Seitenflanke 60a, 60b an und gehen tangential in diese über. Die konkav gekrümmten Flächen 68a, 68b ragen in montiertem Zustand der Zahnprothese 100 zumindest teilweise in den Hohlraum 32 hinein, der hinter dem Verdrehsicherungselement 28 zwischen dessen radial außenliegender Seite 30 und der Innenmantelfläche 26 des Zahnimplantats 10 gebildet ist.

Die an der Suprakonstruktion 20 vorgesehene Schnittstelle 48 ist, abgesehen von der Aussparung 58 (dreh-)symmetrisch zu der Längsachse 54. Die Öffnung 52 verläuft demnach vorzugsweise zentrisch durch den die Schnittstelle 48 bildenden Fortsatz 50 hindurch. Somit ist auch die gesamte Schnittstelle 48 vorzugsweise spiegelsymmetrisch zu einer Längsschnittebene E₂, welche durch die Längsachse 54 und eine orthogonal dazu verlaufende Radialrichtung 70 aufgespannt wird und die Aussparung 58 in zwei gleich große Hälften teilt (siehe Fig. 6).

Zusätzlich zu dem Fortsatz 50 weist die Schnittstelle 48 der Suprakonstruktion 20 eine Auflagefläche 72 auf, die den Fortsatz 50 umgibt. Diese kreisringförmige Auflagefläche 72 dient als Gegenstück zu der am Zahnimplantat angeordneten kreisringförmigen Auflagefläche 44. Sie ist in dem vorliegenden Ausführungsbeispiel daher als konische Fläche ausgestaltet, kann, wie zuvor erwähnt, jedoch auch orthogonal zu der Längsachse 54 der Suprakonstruktion 20 ausgerichtet sein.

## Patentansprüche

1. Zahnimplantat (10), das auf einer Außenseite ein Außengewinde (12) zur Befestigung des Zahnimplantats (10) an einem Kieferknochen aufweist und eine sich entlang einer zentralen Längsachse (14) des Zahnimplantats (10) erstreckende Öffnung (16) hat, in der ein Innengewinde (18) zur Befestigung einer Suprakonstruktion (20) an dem Zahnimplantat (10) angeordnet ist,
wobei das Zahnimplantat (10) ferner eine Schnittstelle (24) zur Befestigung der Suprakonstruktion (20) an dem Zahnimplantat (10) aufweist, die im Bereich eines stirnseitigen Endes des Zahnimplantats (10) angeordnet ist und eine Innenfläche (26) aufweist, die in der Öffnung (16) angeordnet ist und die Längsachse (14) zumindest teilweise umgibt,
wobei das Zahnimplantat (10) ein Verdrehsicherungselement (28) aufweist, das in der Öffnung (16) angeordnet ist und dazu eingerichtet ist, eine Verdrehung der Suprakonstruktion (20) um die Längsachse (14) relativ zu dem Zahnimplantat (10) zu verhindern,
wobei das Verdrehsicherungselement (28) einen geringeren Abstand von der Längsachse (14) hat als die Innenfläche (26), und wobei eine von der Längsachse (14) abgewandte, radial außenliegende Seite (30) des Verdrehsicherungselements (28) auf die Innenfläche (26) zuweist und von dieser beabstandet ist, so dass zwischen der radial außenliegenden Seite des Verdrehsicherungselements (28) und der Innenfläche (26) ein nach oben hin offener Hohlraum (32) existiert,
wobei das Verdrehsicherungselement (28) in einem Querschnitt, der orthogonal zu der Längsachse (14) ausgerichtet ist, eine konvex-konkave Form hat, wobei eine radial innenliegende Seite (36) des Verdrehsicherungselements (28), welche der Öffnung (16) zugewandt ist, konkav geformt ist, und die radial außenliegende Seite (30) des Verdrehsicherungselements (28), welche der radial innenliegenden Seite (36) gegenüberliegt, konvex geformt ist, und
wobei das Verdrehsicherungselement (28) zwei parallel zueinander verlaufende, planare Mitnehmerflächen (34a, 34b) aufweist, die auf gegenüberliegenden Seiten des Verdrehsicherungselements (28) angeordnet sind,
**dadurch gekennzeichnet, dass** die Mitnehmerflächen (34a, 34b) zwischen der radial außenliegenden Seite (30) und der radial innenliegenden Seite (36) des Verdrehsicherungselements (28) verlaufen und quer zu der radial außenliegenden Seite (30) und der radial innenliegenden Seite (36) des Verdrehsicherungselements (28) ausgerichtet sind.

2. Zahnimplantat gemäß Anspruch 1, wobei sich der nach oben hin offene Hohlraum (32), in einem Längsschnitt des Zahnimplantats (10) betrachtet, nach unten hin verjüngt, so dass ein in dem Längsschnitt im Bereich eines nach oben hin offenen Endes des Hohlraums (32) gemessener, erster Abstand (D1) zwischen der radial außenliegende Seite (30) des Verdrehsicherungselements (28) und der Innenfläche (26) größer als ein in dem Längsschnitt im Bereich eines unteren Endes des Hohlraums (32) gemessener, zweiter Abstand (D2) zwischen der radial außenliegende Seite (30) des Verdrehsicherungselements (28) und der Innenfläche (26) ist.

3. Zahnimplantat gemäß Anspruch 1 oder 2, wobei die beiden planaren Mitnehmerflächen (34a, 34b) jeweils parallel zu einer Radialrichtung (38) verlaufen, die orthogonal zu der Längsachse (14) ausgerichtet ist.

4. Zahnimplantat gemäß einem der Ansprüche 1-3, wobei das Verdrehsicherungselement (28) eine konstante Wandstärke hat.

5. Zahnimplantat gemäß einem der Ansprüche 1-4, wobei das Verdrehsicherungselement (28) parallel zu der Längsachse (14) ausgerichtet ist.

6. Zahnimplantat gemäß einem der Ansprüche 1-5, wobei die Schnittstelle (24) spiegelsymmetrisch zu einer Längsschnittebene (E₁) ist, in der die Längsachse (14) liegt und die das Verdrehsicherungselement (28) in zwei gleich große Hälften teilt.

7. Zahnimplantat gemäß einem der Ansprüche 1-6, wobei die Innenfläche (26) eine gewölbte Fläche (44) aufweist, die in einem Längsschnitt, in dem die Längsachse (14) liegt, konvex gewölbt ist.

8. Zahnimplantat gemäß einem der Ansprüche 1-7, wobei die Schnittstelle (24) eine im Vergleich zu der Innenfläche (26) radial weiter außen angeordnete Auflagefläche (44) aufweist, wobei sich die Auflagefläche (44) um die Längsachse (14) herum erstreckt und rund herum um die Längsachse (14) in einem konstanten Winkel quer zu der Längsachse (14) ausgerichtet ist.

9. Zahnimplantat gemäß Anspruch 8, ein radial äußerer Rand der Innenfläche (26) tangential in die Auflagefläche (44) übergeht.

10. Zahnimplantat gemäß einem der Ansprüche 1-9 wobei das Innengewinde (18) einen größeren Abstand von dem stirnseitigen Ende hat als das Verdrehsicherungselement (28).

11. Zahnprothese (100), aufweisend:
- ein Zahnimplantat (10) gemäß einem der Ansprüche 1-10;
- eine Suprakonstruktion (20); und
- ein Befestigungsmittel (22) zur Befestigung der Suprakonstruktion (20) an dem Zahnimplantat (10).

## Claims

1. A dental implant (10) which comprises, on an outer side, an external thread (12) for fixing the dental implant (10) to a jaw bone, and has an opening (16) which extends along a central longitudinal axis (14) of the dental implant (10) and in which an internal thread (18) for fixing a superstructure (20) to the dental implant (10) is arranged,
wherein the dental implant (10) furthermore comprises an interface (24) for fixing the superstructure (20) to the dental implant (10), said interface being arranged in a region of an end face of the dental implant (10) and comprising an inner surface (26) which is arranged in the opening (16) and at least partially surrounds the longitudinal axis (14),
wherein the dental implant (10) comprises an anti-rotation element (28) that is arranged in the opening (16) and is configured to prevent the superstructure (20) from rotating about the longitudinal axis (14) relative to the dental implant (10),
wherein the anti-rotation element (28) is at a shorter distance from the longitudinal axis (14) than the inner surface (26), and wherein a radially outer side (30) of the anti-rotation element (28) that faces away from the longitudinal axis (14) faces the inner surface (26) and is spaced apart therefrom such that there is an upwardly open cavity (32) between the radially outer side of the anti-rotation element (28) and the inner surface (26),
wherein the anti-rotation element (28) has a convex-concave shape in a cross section that is oriented orthogonally to the longitudinal axis (14), wherein a radially inner side (36) of the anti-rotation element (28), which faces the opening (16), is concavely shape, and the radially outer side (30) of the anti-rotation element (28), which is opposite the radially inner side (36), is convexly shaped, and
wherein the anti-rotation element (28) comprises two planar drive surfaces (34a, 34b) extending parallel to each other, which are arranged on opposite sides of the anti-rotation element (28),
**characterized in that** the drive surfaces (34a, 34b) run between the radially outer side (30) and the radially inner side (36) of the anti-rotation element (28) and are arranged transversely to the radially outer side (30) and the radially inner side (36) of the anti-rotation element (28).

2. The dental implant as claimed in claim 1, wherein the upwardly open cavity (32) tapers downward, as viewed in a longitudinal section of the dental implant (10), such that a first distance (D1) between the radially outer side (30) of the anti-rotation element (28) and the inner surface (26), as measured in the longitudinal section in a region of an upwardly open end of the cavity (32), is greater than a second distance (D2) between the radially outer side (30) of the anti-rotation element (28) and the inner surface (26), as measured in the longitudinal section in a region of a lower end of the cavity (32).

3. The dental implant as claimed in claim 1 or 2, wherein each of the two planar drive surfaces (34a, 34b) extends parallel to a radial direction (38) that is oriented orthogonally to the longitudinal axis (14).

4. The dental implant as claimed in one of claims 1-3, wherein the anti-rotation element (28) has a constant wall thickness.

5. The dental implant as claimed in one of claims 1-4, wherein the anti-rotation element (28) is oriented parallel to the longitudinal axis (14).

6. The dental implant as claimed in one of claims 1-5, wherein the interface (24) is mirror-symmetrical with respect to a longitudinal sectional plane (E₁) in which the longitudinal axis (14) lies and which divides the anti-rotation element (28) into two halves of identical size.

7. The dental implant as claimed in one of claims 1-6, wherein the inner surface (26) comprises a curved surface (44) that is curved convexly in a longitudinal section in which the longitudinal axis (14) lies.

8. The dental implant as claimed in one of claims 1-7, wherein the interface (24) comprises a support surface (44) that is arranged radially further outward than the inner surface (26), wherein the support surface (44) extends around the longitudinal axis (14) and is, all around the longitudinal axis (14), oriented at a constant angle transversely with respect to the longitudinal axis (14).

9. The dental implant as claimed in claim 8, wherein a radially outer edge of the inner surface (26) merges tangentially into the support surface (44).

10. The dental implant as claimed in one of claims 1-9, wherein the internal thread (18) is at a greater distance from the end face than the anti-rotation element (28).

11. A dental prosthesis (100), comprising:
- a dental implant (10) as claimed in one of claims 1-10;
- a superstructure (20); and
- a fixing means (22) for fixing the superstructure (20) to the dental implant (10).

## Revendications

1. Implant dentaire (10), qui comporte sur un côté extérieur un filetage extérieur (12) destiné à fixer l'implant dentaire (10) sur une mâchoire et une ouverture (16) qui s'étend le long d'un axe longitudinal central (14) de l'implant dentaire (10) et dans laquelle est disposé un filetage intérieur (18) destiné à fixer une superstructure (20) à l'implant dentaire (10),
l'implant dentaire (10) comportant également une interface (24) qui est destinée à fixer la superstructure (20) à l'implant dentaire (10), qui est disposée dans la région d'une extrémité frontale de l'implant dentaire (10) et qui comporte une surface intérieure (26) qui est disposée dans l'ouverture (16) et qui entoure au moins partiellement l'axe longitudinal (14),
l'implant dentaire (10) comportant un élément anti-rotation (28) qui est disposé dans l'ouverture (16) et qui est conçu pour empêcher la superstructure (20) de tourner sur l'axe longitudinal (14) par rapport à l'implant dentaire (10),
l'élément anti-rotation (28) étant à une plus petite distance de l'axe longitudinal (14) que la surface intérieure (26), et un côté radialement extérieur (30), à l'opposé de l'axe longitudinal (14), de l'élément anti-rotation (28) étant dirigé vers la surface intérieure (26) et à distance de celle-ci de façon à ménager une cavité (32) ouverte vers le haut entre le côté radialement extérieur de l'élément anti-rotation (28) et la surface intérieure (26),
l'élément anti-rotation (28) étant, dans une vue en coupe transversale qui est orientée orthogonalement à l'axe longitudinal (14), une forme convexe-concave, un côté radialement intérieur (36) de l'élément anti-rotation (28), qui est dirigé vers l'ouverture (16), étant de forme concave, et le côté radialement extérieur (30) de l'élément anti-rotation (28), qui est opposé au côté radialement intérieur (36), étant de forme convexe, et
l'élément anti-rotation (28) comportant deux surfaces d'entraînement planes (34a, 34b) parallèles l'une à l'autre qui sont disposées sur des côtés opposés de l'élément anti-rotation (28),
**caractérisé en ce que** les surfaces d'entraînement (34a, 34b) s'étendent entre le côté radialement extérieur (30) et le côté radialement intérieur (36) de l'élément anti-rotation (28) et sont orientées transversalement au côté radialement extérieur (30) et au côté radialement intérieur (36) de l'élément anti-rotation (28).

2. Implant dentaire selon la revendication 1, dans lequel la cavité ouverte vers le haut (32), dans une vue en coupe longitudinale de l'implant dentaire (10), se rétrécit vers le bas de sorte qu'une première distance (D1), mesurée dans la vue en coupe longitudinale dans la région d'une extrémité ouverte vers le haut de la cavité (32), entre le côté radialement extérieur (30) de l'élément anti-rotation (28) et la surface intérieure (26) soit supérieure à une deuxième distance (D2), mesurée dans la vue en coupe longitudinale dans la région d'une extrémité inférieure de la cavité (32), entre le côté radialement extérieur (30) de l'élément anti-rotation (28) et la surface intérieure (26).

3. Implant dentaire selon la revendication 1 ou 2, les deux surfaces d'entraînement planes (34a, 34b) s'étendant chacune parallèlement à une direction radiale (38) qui est orientée orthogonalement à l'axe longitudinal (14).

4. Implant dentaire selon l'une des revendications 1 à 3, l'élément anti-rotation (28) ayant une épaisseur de paroi constante.

5. Implant dentaire selon l'une des revendications 1 à 4, l'élément anti-rotation (28) étant orienté parallèlement à l'axe longitudinal (14).

6. Implant dentaire selon l'une des revendications 1 à 5, l'interface (24) étant à symétrie spéculaire par rapport à un plan de coupe longitudinal (E₁) dans lequel se trouve l'axe longitudinal (14) et qui divise l'élément anti-rotation (28) en deux moitiés de taille égale.

7. Implant dentaire selon l'une des revendications 1 à 6, la surface intérieure (26) comportant une surface incurvée (44) qui est incurvée de manière convexe dans une vue en coupe longitudinale dans laquelle est situé l'axe longitudinal (14).

8. Implant dentaire selon l'une des revendications 1 à 7, l'interface (24) comportant une surface d'appui (44) disposée radialement plus vers l'extérieur par rapport à la surface intérieure (26), la surface d'appui (44) s'étendant autour de l'axe longitudinal (14) et étant orientée autour de l'axe longitudinal (14) selon un angle constant transversalement à l'axe longitudinal (14).

9. Implant dentaire selon la revendication 8, un bord radialement extérieur de la surface intérieure (26) se transformant tangentiellement en la surface d'appui (44).

10. Implant dentaire selon l'une des revendications 1 à 9, le filetage intérieur (18) étant à une plus grande distance de l'extrémité frontale que l'élément anti-rotation (28).

11. Prothèse dentaire (100) comportant :
- un implant dentaire (10) selon l'une des revendications 1 à 10 ;
- une superstructure (20) ; et
- un moyen de fixation (22) destiné à fixer la superstructure (20) à l'implant dentaire (10).
